# EUROPEAN PATENT APPLICATION

(11) **EP 4 783 279 A1**
(43) Date of publication of application: **29.07.2026**
(21) Application number: 25833607.2
(22) Date of filing: 02.07.2025
(51) Int. Cl.: H01M 10/04, H01M 4/70, H01M 50/107, H01M 50/249, H01M 4/02

(54) **BATTERY, BATTERY PACK AND VEHICLE INCLUDING SAME**

(30) Priority: 05.07.2024 KR 20240089202
(71) Applicant: LG ENERGY SOLUTION, LTD., Seoul 07335 (KR)
(72) Inventor: The designation of the inventor has not yet been filed
(74) Representative: Goddar, Heinz J.
(86) International application number: PCT/KR2025/009435
(87) International publication number: WO 2026/010362

(57) **Abstract**

A battery includes a cell housing, an electrode assembly positioned within the cell housing, and a current collector plate positioned within the housing and electrically coupled to both the cell housing and a second electrode of the electrode assembly. The current collector plate includes an electrode coupling portion electrically coupled to the second electrode, a peripheral portion electrically coupled to the cell housing, and at least one bridge extending between and connecting the electrode coupling portion and the peripheral portion. The bridge includes an adjustable portion configured to deform in response to an applied force, and the peripheral portion may include a rigidity reinforcing structure. The battery may be a cylindrical battery, and the electrode assembly may have a jelly-roll configuration, with the second electrode being a negative electrode. A battery pack including multiple such batteries, and a vehicle including at least one of such battery packs, is also provided.

## Description

### TECHNICAL FIELD

The present disclosure relates to a battery, a battery pack and a vehicle including the same. More particularly, the battery may be a rechargeable secondary battery, such as a lithium-ion secondary battery.

This application claims priority from Korean Patent Application No. 10-2024-0089202, filed July 5, 2024, the entire disclosure of which is incorporated herein by reference.

### BACKGROUND ART

In recent years, as the demand for portable electronic products such as laptops, video cameras, and mobile phones has rapidly increased and the development of electric vehicles, energy storage batteries, robots, and satellites has begun in earnest, research on high-performance secondary batteries that can be charged and discharged repeatedly has been actively conducted.

Currently commercialized secondary batteries include nickel cadmium batteries, nickel hydrogen batteries, nickel zinc batteries, lithium secondary batteries, and the like. Among them, lithium secondary batteries are in the spotlight as they have advantages of free charging and discharging due to almost no memory effect compared to nickel-based secondary batteries, very low self-discharge rate, and high energy density.

These lithium-ion secondary batteries mainly use a lithium-based oxide and a carbon material as a positive electrode active material and a negative electrode active material, respectively. Additionally, a lithium-ion secondary battery includes an electrode assembly in which a positive electrode plate and a negative electrode plate coated with the positive electrode active material and the negative electrode active material, respectively, are disposed with a separator therebetween, and an exterior material that accommodates and seals the electrode assembly therein together with an electrolyte.

Meanwhile, depending on the shape of a battery case, lithium-ion secondary batteries may be classified into pouch-type secondary batteries, in which the electrode assembly is embedded in a pouch of an aluminum laminate sheet, and can-type secondary batteries, in which the electrode assembly is embedded in a metal can. Moreover, can-type secondary batteries may be divided into cylindrical batteries and prismatic batteries, according to the form of the metal can. Lithium-ion secondary batteries may be used as battery modules or battery packs, in which multiple battery cells are assembled in a dense structure by overlapping or stacking them in a state in which they are mounted on themselves or on a cartridge and then electrically connected to each other so as to provide high voltage and high current.

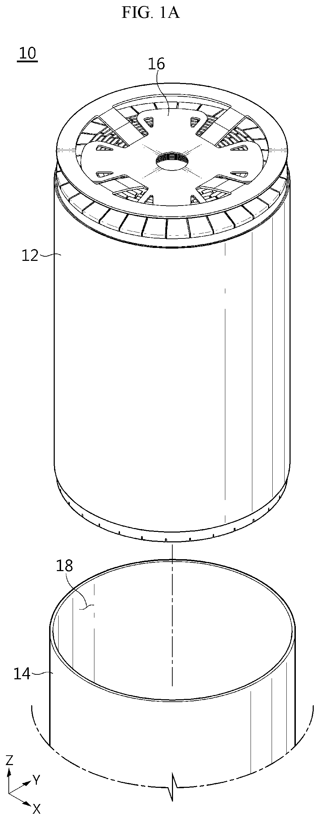

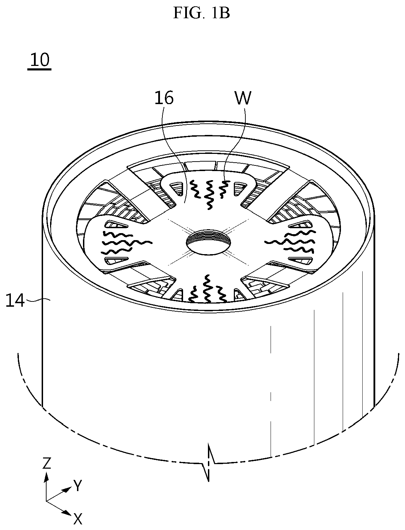

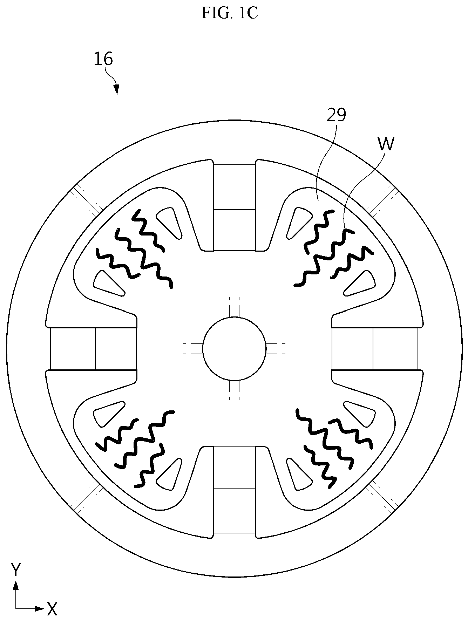

FIGS. 1A-1B are sequential perspective views showing the steps of inserting an electrode assembly with a current collector plate coupled thereto into a cell housing in a conventional battery and FIG. 1C is a partial top plan view of a current collector plate in a conventional battery.

Referring to FIGS. 1A to 1C, a conventional cylindrical battery 10 may include a negative electrode current collector plate 16. The negative electrode current collector plate 16 may be electrically coupled to the negative electrode of the electrode assembly 12 and also the metal can (cell housing) 14 so that the can 14 has the same electrical potential as the negative electrode and can act as a negative terminal of the battery 10. The cylindrical battery 10 including the negative electrode current collector plate 16 may be manufactured by a process of coupling the negative electrode current collector plate 16 to the electrode assembly 12 and inserting the electrode assembly 12 with the negative electrode current collector plate 16 coupled thereto into the metal can 14.

It may be important that the negative electrode current collector plate 16 and the electrode assembly 12 are coupled concentrically to each other such that they share a common central axis. If the center of the negative electrode current collector plate 16 and the center of the electrode assembly 12 are significantly off-center with respect to each other, the negative electrode current collector plate 16 may interfere with or be caught in the metal can 14 when the electrode assembly 12 is inserted into the metal can 14, thereby making the insertion difficult. Even if the electrode assembly 12 with the off-center negative electrode current collector plate 16 are forcibly inserted into the metal can 14, the negative electrode current collector plate 16, the electrode assembly 12, and/or the metal can 14 may be unintentionally deformed. In addition, if the outer diameter of the negative electrode current collector plate 16 and the inner wall of the metal can 14 are not substantially in abutting contact with one another, it may be difficult or impossible to weld the negative electrode current collector plate 16 and the metal can 14. Nevertheless, it is very difficult to precisely align the respective centers of the negative electrode current collector plate 16 and the electrode assembly 12 in the process.

### DISCLOSURE

### Technical Problem

Among the benefits of the present disclosure are that a battery, and a battery pack and a vehicle including the same, are provided in which the current collector plate (e.g., negative electrode current collector plate) and the electrode assembly may be easily and firmly inserted into the cell housing (e.g., metal can) even when the current collector plate and the electrode assembly are off-center with respect to each other.

Another benefit that may be provided by some aspects of the present disclosure are that the current collector plate may be substantially in abutting contact with the cell housing to allow the current collector plate and the cell housing to be effectively coupled (e.g., welded) even when the current collector plate and the electrode assembly are off-center with respect to each other.

Yet another benefit that may be provided by some aspects of the present disclosure is that deformation of the peripheral portion may be effectively prevented even when the current collector plate and the electrode assembly are inserted into the cell housing in a state of being off-center with respect to each other.

Other technical solutions provided by the present disclosure are not limited to the above, and it is appreciated that other problems not mentioned herein may be clearly understood by those skilled in the art from the following description of the present disclosure.

### Technical Solution

A battery according to the present disclosure desirably includes a cell housing, an electrode assembly positioned within the cell housing, the electrode assembly including a first electrode having a first polarity, a second electrode having a second polarity opposite to the first polarity, and a separator interposed between the first and second electrodes; a current collector plate positioned within the housing and electrically coupled to both the cell housing and the second electrode, the current collector plate including: an electrode coupling portion electrically coupled to the second electrode; a peripheral portion electrically coupled to the cell housing; and at least one bridge extending between and connecting the electrode coupling portion and the peripheral portion, wherein the at least one bridge includes an adjustable portion configured to deform in response to an applied force.

Also, the first polarity of the first electrode may be positive and the second polarity of the second electrode may be negative.

Also, the cell housing may have a cylindrical outer profile, and the peripheral portion of the current collector plate may have an annular shape.

Also, a radially outer surface of the peripheral portion may abut an inner surface of the cell housing.

Also, the radially outer surface of the peripheral portion may be welded to the inner surface of the cell housing.

Also, the electrode coupling portion may be positioned radially inwardly relative to the peripheral portion.

The at least one bridge of the current collector may be a plurality of bridges including a first bridge and a second bridge, each of the first and second bridges having a respective adjustable portion.

The first and second bridges may be positioned opposite one another across a center of the current collector plate.

The adjustable portion of the at least one bridge may be configured to deform so as to change the length of the at least one bridge in response to the applied force.

The bridge may be linearly elongated along a radial direction of the current collector plate.

The adjustable portion may have a bent shape that deviates from the radial direction of the at least one bridge.

The adjustable portion may be configured to fold in response to the applied force.

The adjustable portion may include a notch for facilitating the folding movement of the adjustable portion.

The peripheral portion of the current collector plate may include a rigidity reinforcing structure for reinforcing the rigidity of the peripheral portion.

The rigidity reinforcing structure may extend transverse to a radial plane along which the current collector plate is oriented.

The rigidity reinforcing structure may include at least one annular wall projecting transverse to the radial plane.

The peripheral portion may have a planar surface oriented parallel to the radial plane, and the rigidity reinforcing structure may define a deviation from the planar surface along a vertical dimension orthogonal to the radial plane.

The electrode assembly may have a jelly-roll structure comprising the first electrode, the second electrode, and the separator interposed therebetween all wound around a central axis extending transverse to a radial plane along which the current collector plate is oriented.

A battery pack according to the present disclosure may include a plurality of batteries according to the present disclosure.

A vehicle according to the present disclosure may include the battery pack a power source for the vehicle.

### Advantageous Effects

According to the present disclosure, there may be provided a battery, and a battery pack and a vehicle including the same, in which the bridge of the current collector plate has an adjustable portion, so that the current collector plate and the electrode assembly may be easily and firmly inserted into the cell housing even when the current collector plate and the electrode assembly are off-center with respect to each other.

Additionally, there may be provided a battery, and a battery pack and a vehicle including the same, in which the bridge of the current collector plate has an adjustable portion, so that the current collector plate may be substantially in abutting contact with the cell housing to allow the current collector plate and the cell housing to be effectively coupled even when the current collector plate and the electrode assembly are off-center with respect to each other.

Additionally, there may be provided a battery, and a battery pack and a vehicle including the same, in which the peripheral portion of the current collector plate has a rigidity reinforcing portion, so that deformation of the peripheral portion may be effectively prevented even when the current collector plate and electrode assembly are inserted into the cell housing in a state of being off-center with respect to each other.

The effects to be obtained by the present disclosure are not limited to the above-described effects, and other effects not mentioned herein may be clearly understood by those having ordinary skill in the art from the present specification and the accompanying drawings.

### DESCRIPTION OF DRAWINGS

The accompanying drawings illustrate preferred aspects of the present disclosure, and, together with the foregoing disclosure, serve to provide further understanding of the technical features of the present disclosure. Thus, the present disclosure is not to be construed as being limited to the specific aspects as depicted in the drawings.
FIGS. 1A-1B are sequential perspective views showing the steps of inserting an electrode assembly with a current collector plate coupled thereto into a cell housing in a conventional battery.
FIG. 1C is a partial top plan view of a current collector plate in a conventional battery.
FIG. 2 is a perspective view showing the overall outer appearance of a battery according to an aspect of the present disclosure.
FIG. 3 is a another perspective view showing the overall outer appearance of a battery according to an aspect of the present disclosure.
FIG. 4 is a side cross-sectional view showing the overall structure of a battery according to an aspect of the present disclosure.
FIG. 5 is a side cross-sectional view showing a portion of a battery according to an aspect of the present disclosure.
FIG. 6 is a perspective view showing a current collector plate of a battery according to an aspect of the present disclosure.
FIG. 7 is a side cross-sectional view showing a bridge of a current collector plate according to an aspect of the present disclosure.
FIG. 8 is a side cross-sectional view showing a bridge of a current collector plate according to another exemplary aspect of the present disclosure.
FIG. 9 parts (a)-(d) are side cross-sectional views of various shapes of peripheral portions of a current collector plate according to various aspects of the present disclosure.
FIG. 10 is a view showing a battery pack according to an aspect of the present disclosure.
FIG. 11 is a view showing a vehicle according to an aspect of the present disclosure.

### BEST MODE

Hereinafter, preferred aspects of the present disclosure will be described in detail with reference to the accompanying drawings. Prior to the description, it should be understood that the terms used in the specification and the appended claims should not be construed as limited to general and dictionary meanings, but rather interpreted based on the meanings and concepts corresponding to technical aspects of the present disclosure, on the basis of the principle that the inventor may define terms appropriately for the best explanation.

Therefore, the aspects described in this specification and the configurations illustrated in the drawings are only some of the most preferred aspects of the present disclosure, not intended to entirely represent all technical aspects of the present disclosure, so it should be understood that various equivalents and modifications may be made thereto at the time of filing the present application, and which are encompassed by the present disclosure.

It is noted that, for each of the different aspects of the present disclosure, duplicate descriptions of substantially identical or similar configurations may be omitted, with significant differences being primarily described.

In this specification, unless otherwise specified, the Z-axis direction is the vertical direction, and the X- and Y-axis directions are horizontal directions perpendicular to the Z-axis.

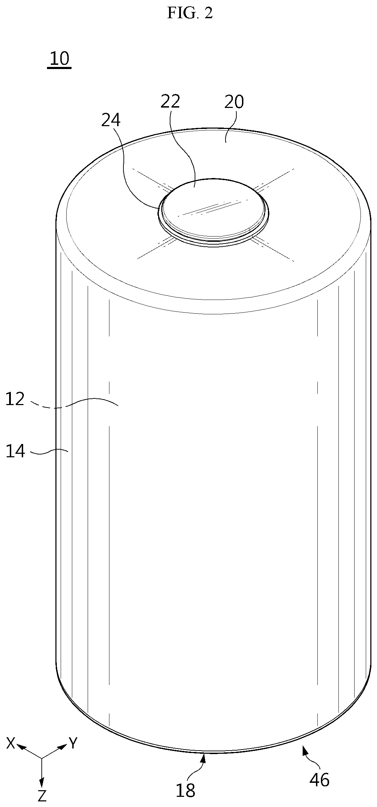

The reference numerals used herein may partially overlap between FIGS. 1A to 1C and FIGS. 2 to 11. However, it should be understood that the components designated by the reference numerals in FIGS. 1A to 1C and those designated by the reference numerals in FIGS. 2 to 11 refer to different elements.

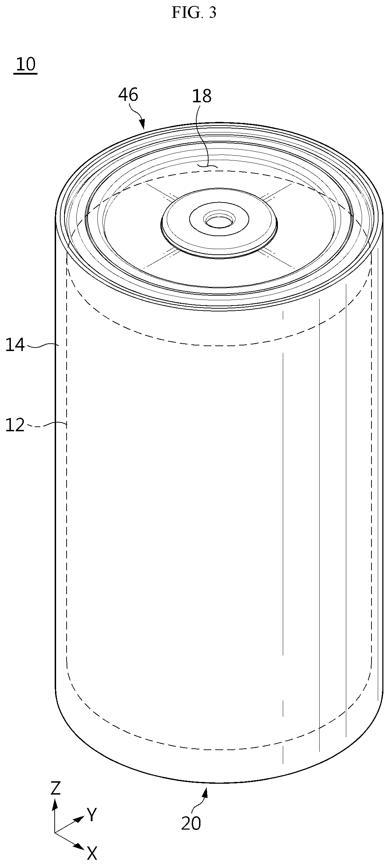

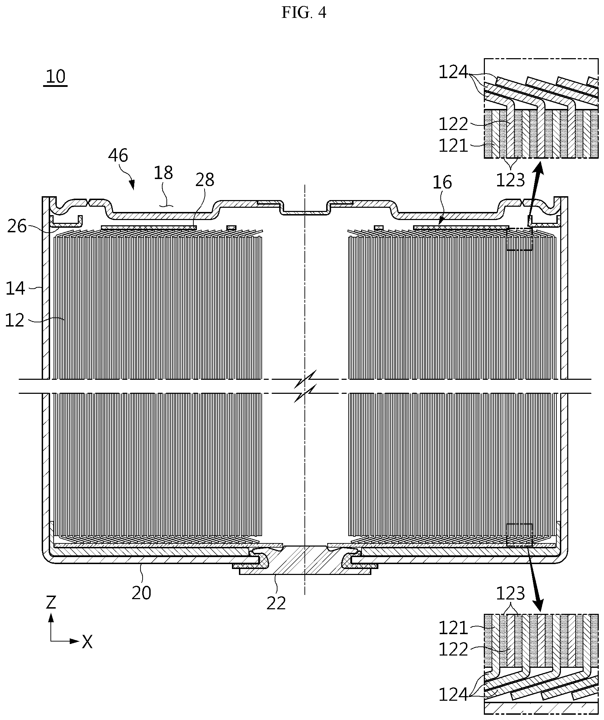

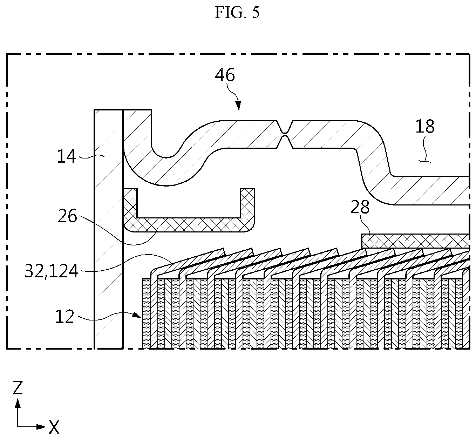

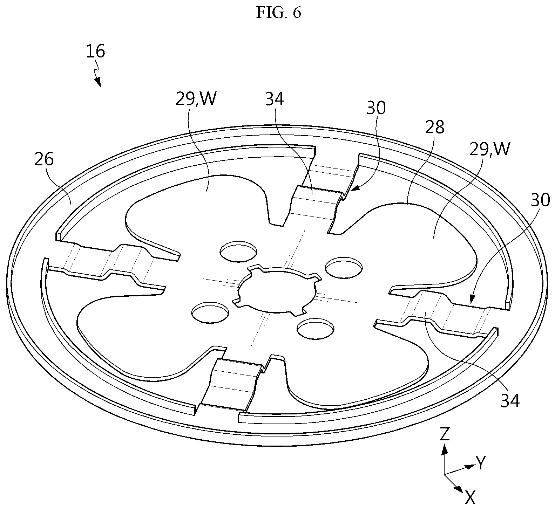

FIG. 2 is a perspective view showing the overall outer appearance of a battery according to an aspect of the present disclosure, FIG. 3 is a another perspective view showing the overall outer appearance of a battery according to an aspect of the present disclosure, FIG. 4 is a side cross-sectional view showing the overall structure of a battery according to an aspect of the present disclosure, FIG. 5 is a side cross-sectional view showing a portion of a battery according to an aspect of the present disclosure, and FIG. 6 is a perspective view showing a current collector plate of a battery according to an aspect of the present disclosure.

Hereinafter, referring to FIGS. 2 to 6, a battery 10 according to an aspect of the present disclosure may include an electrode assembly 12, a cell housing 14, and a current collector plate 16. The battery 10 may be a secondary battery configured to be chargeable and dischargeable. For example, the battery 10 may be a cylindrical battery.

The electrode assembly 14 may include one or more first electrodes 121 and one or more second electrodes 122 with a respective separator 123 (or respective portions of a longer separator 123) interposed therebetween. The first 121 and second electrodes 122 and the separator(s) 123 interposed therebetween may be stacked to form a stack. The first electrodes 121 may have a first polarity, and the second electrodes 122 may have a second polarity that is opposite to the first polarity. In one example, a single long first electrode sheet and a single long second electrode sheet may be stacked with a single long separator sheet positioned therebetween, and that stack may be rolled about an axis to define a spiral-shaped structure or "jelly-roll." Each of the long electrode sheets may have a respective edge region 32 along an axial end of the jelly-roll that is not coated with electrode active material and/or one or more electrically conductive tabs 124 that are electrically coupled with the current collector of the respective electrode may be defined along such axial edge region. For example, that edge region 32 of the first electrode 121 may be at a first axial end of the jelly-roll, and the edge region 32 of the second electrode 122 may be at the opposite second axial end of the jelly-roll. For example, the edge regions 32 of each of the first electrode 121 and the second electrode 122 may include tabs 124. Those uncoated edge regions 32 and/or tabs 124 may be used to electrically couple the respective electrodes 121, 122 with other structures of the battery 10 so that the positive and negative polarities of the respective electrodes 121, 122 electrically communicate with the positive and negative terminals of the battery 10, respectively.

The cell housing 14 may accommodate the electrode assembly 12 therein. An opening 18 may be formed in the cell housing 14, and the electrode assembly 12 may be inserted through the opening 18 and accommodated in the cell housing 14. The cell housing 14 may have a closed end 20 defined on the opposite end from the opening 18. As shown in FIG. 2, the closed end 20 may include a terminal 22 centrally disposed thereon. In an example in which the cell housing 14 has the same electrical potential as one of the electrodes 121, 122 and thus acts as a terminal having the polarity of that electrode, the terminal 22 at the closed end 20 of the cell housing 14 may have the opposite polarity. The cell housing 14 may be formed of or may include a conductive metal. Thus, electrically insulating material (not shown) may be provided along the border 24 between the terminal 22 and the rest of the cell housing 14 at the closed end 20 to electrically isolate them from one another.

The current collector plate 16 may be electrically coupled to both the cell housing 14 and the second electrode 122. The current collector plate 16 may be electrically (and physically) disposed between the connections to the cell housing 14 and the electrode assembly 12 containing the second electrode 122. By the current collector plate 16, the cell housing 14 may be electrically connected to the second electrode 122 of the electrode assembly 12.

The current collector plate 16 may have a peripheral portion 26, an electrode coupling portion 28, and at least one bridge 30 connecting them.

The peripheral portion 26 may be electrically coupled to the cell housing 14. The peripheral portion 26 may be provided along a peripheral edge of the current collector plate 16.

The electrode coupling portion 28 may be electrically coupled to the second electrode 122 of the electrode assembly 12. For example, the electrode coupling portion 28 may be welded at one or more welding locations W to tabs 124 and/or uncoated portions 32 at an axial end of the electrode assembly 12 as mentioned above. In the example illustrated in FIG. 5, the second electrode 122 may include an uncoated portion 32 that does not include an active material at an axial end of the electrode assembly 12 proximate the current collector plate 16. The electrode coupling portion 28 may be electrically coupled (e.g., by welding) to the uncoated portion 32 of the second electrode 122. In that regard, the electrode coupling portion 28 may include one or more lobes 29 that define welding locations W where the lobes 29 of the electrode coupling portion 28 may be welded to the uncoated portion 32 of the second electrode 122.

Each bridge 30 may connect the peripheral portion 26 and the electrode coupling portion 28. Specifically, the bridge 30 may electrically connect the peripheral portion 26 and the electrode coupling portion 28. One end of each bridge 30 may be connected to the peripheral portion 26, and the other end may be connected to the electrode coupling portion 28.

The bridge 30 may include an adjustable portion 34. The adjustable portion 34 may be configured to be deformable. For example, the adjustable portion 34 may have a shape which is deformable. The adjustable portion 34 may be deformed in response to applied force. For example, when a force is applied to the bridge 30 from the peripheral portion 26, the shape of the adjustable portion 34 may be deformed.

The first electrode 121 may be a positive electrode, and the second electrode 122 may be a negative electrode. Thus, the current collector plate 16 may be a negative electrode current collector plate.

The peripheral portion 26 may be electrically and structurally coupled to the cell housing 14 by welding. For example, the outer circumference of the peripheral portion 26 and the inner circumference of the cell housing 14 may be welded to each other. In the present disclosure, welding may be understood as any one of laser welding, spot welding, and ultrasonic welding, for example.

The peripheral portion 26 may have an arcuate shape. That is, the peripheral portion 26 may define all or a portion of a circle. Meanwhile, the cell housing 14 may have a cylindrical can shape with a circular cross-section. The radius of the outer circumference of the peripheral portion 26 may be approximately equal to the radius of the inner circumference of the cell housing 14.

The electrode coupling portion 28 may be disposed radially inwardly relative to the peripheral portion 26. That is, the peripheral portion 26 may be disposed to surround the electrode coupling portion 28. Moreover, each of the bridges 30 may connect the electrode coupling portion 28 with the peripheral portion 26, such as by extending radially between the electrode coupling portion 28 and the peripheral portion 26. As an example, as shown in FIG. 6, the bridges 30 may extend from portions of the electrode coupling portion 28 between the lobes 29. In the depicted example, four lobes 29 and four bridges 30 may be provided. However, in alternative configurations, more or fewer lobes 29 and/or bridges 30 may be provided.

The at least one bridge 30 of the current collector 16 may be a plurality of bridges 30 including a first bridge and a second bridge, each of the first and second bridges having a respective adjustable portion. The first and second bridges may be positioned opposite one another across a center of the current collector plate 16.

The bridges 30 may include an elastic material.

The adjustable portions 34 may be configured to allow the length of the respective bridges 30 to change. The length of the bridge 30 may be understood as a distance from one end to the other end of the bridge 30. The adjustable portion 34 may be deformed, for example, to allow the length of the bridge 30 to shorten. The adjustable portion 34 may also be deformed, for example, so as to allow the length of the bridge 30 to increase. When force is applied to any one bridge 30 to cause the length of the bridge 30 to be reduced, the length of the bridge 30 disposed on the opposite side of the current collector plate 16 may be increased.

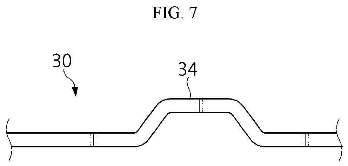

FIG. 7 is a side cross-sectional view showing a bridge 30 of a current collector plate 16 according to an exemplary aspect of the present disclosure.

Referring to FIG. 7, the adjustable portion 34 may define a bent shape of the respective bridge 30. In that manner, deformation of the adjustable portion 34 may be facilitated.

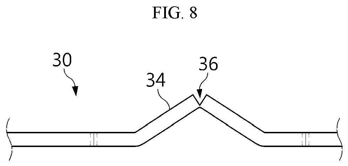

FIG. 8 is a side cross-sectional view showing a bridge 30 of a current collector plate 16 according to another exemplary aspect of the present disclosure.

Referring to FIG. 8, the adjustable portion 34 may be configured so as to fold upon application of force. In such case, the adjustable portion 34 may readily move towards a more folded or less folded configuration upon application of force. The adjustable portion 34 may also have a folding guide portion 36 that facilitates the folding movement. The folding guide portion 36 may be defined by, for example, one or more notches formed in the adjustable portion 34.

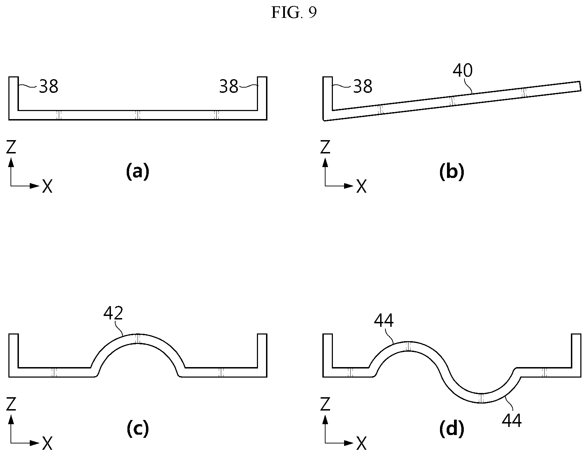

FIG. 9 parts (a)-(d) are side cross-sectional views of various shapes of peripheral portions 26 of a current collector plate 16 according to various aspects of the present disclosure.

Referring to FIGS. 5 and 9, the peripheral portion 26 may have rigidity reinforcing structure. Such rigidity reinforcing structure desirably reinforces the rigidity of the peripheral portion 26. For example, when the adjustable portion 34 of the bridge 30 is deformed by forces, the peripheral portion 26 desirably maintains its shape due to the rigidity provided by the rigidity reinforcing structure.

The peripheral portion 26 of the current collector plate 16 may have a generally horizontal orientation (i.e., extending in a radial direction orthogonal to the central longitudinal axis of the battery 10, which may be coincident with the winding axis of the electrode assembly 12 when provided as a jelly-roll structure). Thus, the rigidity reinforcing structure may be in the form of portions extending along a direction different from or transverse to the radial direction. Referring to the drawings, for example, the central longitudinal axis may be parallel to the vertical or height dimension (i.e., Z axis), and the rigidity reinforcing structure may extend in a direction different from the horizontal plane (i.e., XY plane) extending orthogonally to the vertically-oriented, central longitudinal axis. For example, the rigidity reinforcing structure may extend in a vertical direction or otherwise along a direction extending obliquely relative to the vertical direction or the horizontal plane.

Referring to part (a) of FIG. 9, for example, the peripheral portion 26 may have a rigidity reinforcing structure in the form of walls 38 extending along the radially inner and outer portions of the peripheral portion 26 that project in a vertical or axial direction, so as to give the peripheral portion 26 a roughly 'U' shape. Referring to part (b) of FIG. 9, for example, the peripheral portion 26 may have a rigidity reinforcing structure that includes a wall 38 extending vertically along the outer perimeter of the peripheral portion 26, similar to part (a) of FIG. 9, and the remaining, radially-oriented surface 40 of the peripheral portion 26 may be inclined upwardly as it approaches the radially inner portion of the peripheral portion 26. Referring to part (c) of FIG. 9, for example, the peripheral portion 26 may have a rigidity reinforcing structure that protrudes in the vertical dimension, which may be located between the radially inner and radially outer portions of the peripheral portion 26. As shown in the figure, that protruding structure may be defined by a portion of the radially-oriented surface of the peripheral portion 26 that deviates from and then returns to the horizontal plane. That deviation may result in an upwardly convex protrusion 42, as shown in part (c) of FIG. 9, but in another example (not shown) may form a downwardly convex protrusion. Referring to part (d) of FIG. 9, for example, the peripheral portion 26 may have a rigidity reinforcing structure that has repeated deviations 44, such as repeated bends away from the horizontal plane, for example so as to result an upwardly convex protrusion adjacent to a downwardly convex protrusion.

According to the above aspects of the present disclosure, the bridges 30 of the current collector plate 16 have one or more adjustable portions 34, so that the current collector plate 16 and the electrode assembly 12 may be easily and firmly inserted into the cell housing 14 even when the current collector plate 16 and the electrode assembly 12 are mis-aligned, such that their central axes are non-collinear with each other. Specifically, even when the current collector plate 16 and the electrode assembly 12 are coupled to each other in an off-center state, and the current collector plate 16 and electrode assembly 12 thus coupled are inserted into the cell housing 14, the current collector plate 16 may be deformed to fit in the cell housing 14 due to the deformation of one or more of the adjustable portions 34, so that the current collector plate 16 and the electrode assembly 12 may be relatively easily and firmly inserted into the cell housing 14.

Additionally, according to the above aspects of the present disclosure, the current collector plate 16 may be in substantially flush abutting contact with the cell housing 14 to allow the current collector plate 16 and the cell housing 14 to be effectively coupled (e.g., welded) even when the current collector plate 16 and the electrode assembly 12 are off-center with respect to each other.

Additionally, due at least in part to the rigidity reinforcing structure discussed above, deformation of the peripheral portion 26 may be effectively prevented even when the current collector plate 16 and electrode assembly 12 are inserted into the cell housing 14 in a state of being off-center with respect to each other.

Meanwhile, referring to FIGS. 2, 3 and 5 again, the battery 10 according to the present disclosure may include a can lid 46. The can lid 46 may be coupled to the the cell housing 14 at the opening 18. The can lid 46 may be disposed to cover the opening 18. The can lid 46 may be fitted into the opening 18. The can lid 46 may be welded to the cell housing 14. The can lid 46 may be disposed at one outermost end of the cell housing 14, opposite to the closed end 20, and may form a part of the external shape of the battery 10. In the case of a conventional battery, the cell housing may include a beading portion and a crimping portion having a recessed shape, wherein the electrode assembly and the current collector plate may be fixed by the beading portion and the crimping portion. However, the battery 10 according to the present disclosure may not include the beading portion and the crimping portion of the conventional battery. In the battery 10 according to the present disclosure, the electrode assembly 12 and the current collector plate 16 may be firmly and stably fixed without including the beading portion and the crimping portion of the conventional battery.

Meanwhile, preferred examples of the battery 10 according to the present disclosure have been described hereinabove. However, the technical idea of the present disclosure is not limited to these examples, and may include a combination of any two or more of them.

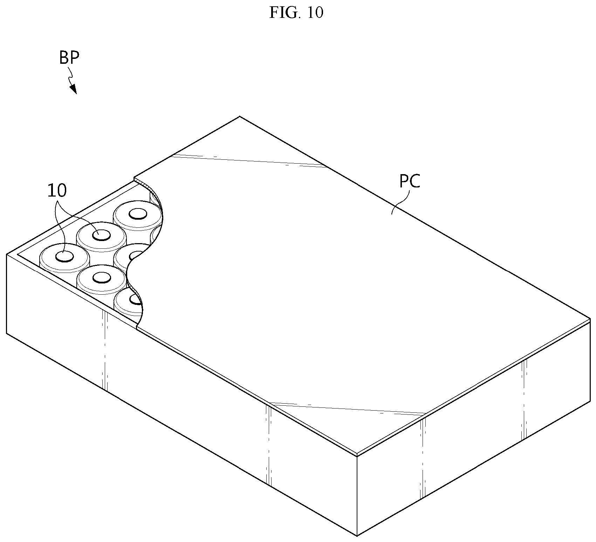

FIG. 10 is a view showing a battery pack BP according to an aspect of the present disclosure.

Referring to FIG. 10, a battery pack BP according to the present disclosure may include one or more batteries 10 according to the present disclosure.

The battery pack BP may further include various other components in addition to the battery 10. For example, components of the battery pack BP may include one or more of a battery management system (BMS), a busbar, a pack case PC, a relay, a current sensor, and the like.

In the above examples, the current collector plate 16 having may be a negative electrode current collector plate by being electrically coupled to a negative electrode of the battery 10. However, in accordance with the present disclosure, the current collector plate 16 is not limited to being a negative electrode current collector plate, but rather may be a positive electrode current collector plate by being electrically coupled to a positive electrode of the electrode assembly 12 of the battery 10.

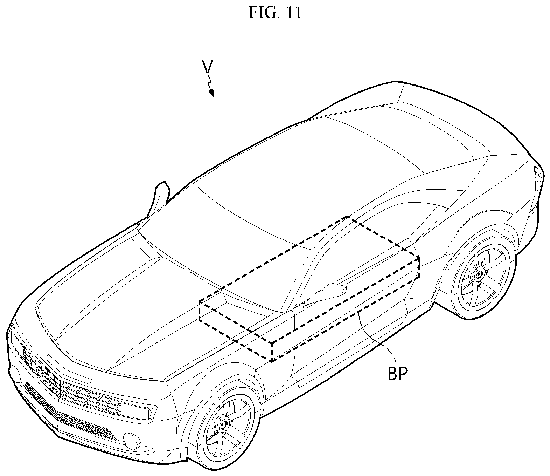

FIG. 11 is a view showing a vehicle V according to an aspect of the present disclosure.

Referring to FIG. 11, a vehicle V according to the present disclosure may include a battery pack BP according to the present disclosure. The vehicle V may be a hybrid vehicle or an electric vehicle, where the battery pack BP including one or more batteries 10 in accordance with the present disclosure is a power source for the vehicle V. The vehicle V according to the present disclosure may further include various other components included in the vehicle V in addition to the battery pack BP. For example, the vehicle V according to the present disclosure may further include a vehicle body, a motor, a control device such as an electronic control unit (ECU), or the like in addition to the battery pack BP according to the present disclosure.

As described above, the present disclosure has been described with reference to particular aspects, but it is to be understood that those aspects are merely illustrative of the principles and applications of the present disclosure. It is therefore to be understood that numerous modifications may be made to the illustrative aspects and that other arrangements may be devised without departing from the spirit and scope of the present disclosure, as defined by the appended claims.

### [Reference Signs]

10: battery
12: electrode assembly
121: first electrode
122: second electrode
123: separator
124: tab
14: cell housing
16: current collector plate
18: opening
20: closed end
22: terminal
24: border
26: peripheral portion
28: electrode coupling portion
29: lobe
30: bridge
32: uncoated portion
34: adjustable portion
36: folding guide portion
38: wall
40: radially-oriented surface
42: protrusion
44: deviation
46: can lid
BP: battery pack
PC: pack case
V: vehicle

## Claims

1. A battery, comprising:
a cell housing;
an electrode assembly positioned within the cell housing, the electrode assembly including a first electrode having a first polarity, a second electrode having a second polarity opposite to the first polarity, and a separator interposed between the first and second electrodes;
a current collector plate positioned within the housing and electrically coupled to both the cell housing and the second electrode, the current collector plate including:
an electrode coupling portion electrically coupled to the second electrode;
a peripheral portion electrically coupled to the cell housing; and
at least one bridge extending between and connecting the electrode coupling portion and the peripheral portion,
wherein the at least one bridge includes an adjustable portion configured to deform in response to an applied force.

2. The battery of claim 1, wherein the first polarity of the first electrode is positive and the second polarity of the second electrode is negative.

3. The battery of claim 1, wherein the cell housing has a cylindrical outer profile, and wherein the peripheral portion of the current collector plate has an annular shape.

4. The battery of claim 3, wherein a radially outer surface of the peripheral portion abuts an inner surface of the cell housing.

5. The battery of claim 4, wherein the radially outer surface of the peripheral portion is welded to the inner surface of the cell housing.

6. The battery of claim 3, wherein the electrode coupling portion is positioned radially inwardly relative to the peripheral portion.

7. The battery of claim 1, wherein the at least one bridge of the current collector is a plurality of bridges including a first bridge and a second bridge, each of the first and second bridges having a respective adjustable portion.

8. The battery of claim 7, wherein the first and second bridges are positioned opposite one another across a center of the current collector plate.

9. The battery of claim 1, wherein the adjustable portion of the at least one bridge is configured to deform so as to change the length of the at least one bridge in response to the applied force.

10. The battery of claim 1, wherein the bridge is linearly elongated along a radial direction of the current collector plate.

11. The battery of claim 10, wherein the adjustable portion has a bent shape that deviates from the radial direction of the at least one bridge.

12. The battery of claim 1, wherein the adjustable portion is configured to fold in response to the applied force.

13. The battery of claim 12, wherein the adjustable portion includes a notch for facilitating the folding movement of the adjustable portion.

14. The battery of claim 1, wherein the peripheral portion of the current collector plate includes a rigidity reinforcing structure for reinforcing the rigidity of the peripheral portion.

15. The battery of claim 14, wherein the rigidity reinforcing structure extends transverse to a radial plane along which the current collector plate is oriented.

16. The battery of claim 15, wherein the rigidity reinforcing structure includes at least one annular wall projecting transverse to the radial plane.

17. The battery of claim 15, wherein the peripheral portion has a planar surface oriented parallel to the radial plane, and wherein the rigidity reinforcing structure defines a deviation from the planar surface along a vertical dimension orthogonal to the radial plane.

18. The battery of claim 1, wherein the electrode assembly has a jelly-roll structure comprising the first electrode, the second electrode, and the separator interposed therebetween all wound around a central axis extending transverse to a radial plane along which the current collector plate is oriented.

19. A battery pack including a plurality of batteries according to claim 1.

20. A vehicle including the battery pack of claim 19 as a power source for the vehicle.
